# EUROPEAN PATENT APPLICATION

(11) **EP 4 481 341 A1**
(43) Date of publication of application: **25.12.2024**
(21) Application number: 24382643.5
(22) Date of filing: 13.06.2024
(51) Int. Cl.: G01J 3/26, G01J 3/28, G01J 3/12, G01N 21/17

(54) **ADJUSTABLE IMAGING SYSTEM, DEVICE AND METHOD**

(30) Priority: 23.06.2023 EP 23382648
(71) Applicant: Urugus S.A., Montevideo (UY)
(72) Inventor: Palombo Blascetta, Nicola, Barcelona (ES); Brumovsky, Andres Francisco, Buenos Aires (AR); Rueda, Delfina, Barcelona (ES); Vilaseca, David Ivan, Barcelona (ES)
(74) Representative: Isern Patentes y Marcas S.L.

(57) **Abstract**

The disclosure provides a remote sensing system comprising, a detecting device configured to detect electromagnetic radiation, a first filter disposed at least partially within an optical path of the detecting device, and configured to allow electromagnetic radiation of wavelengths below a first threshold to pass towards the detecting device, and a second filter disposed at least partially within the optical path of the detecting device, and configured to allow electromagnetic radiation of wavelengths above a second threshold to pass towards the detecting device, wherein the first threshold is larger than the second threshold, and wherein at least one of a value of the first threshold or a value of the second threshold is determined based at least in part on a spectrum of interest. The disclosure also provides a method of operating the remote sensing system.

## Description

### CROSS REFERENCE TO RELATED APPLICATIONS

The present application claims priority to EP. Patent Application No.23382648, filed on June 23, 2023, and entitled "ADJUSTABLE IMAGING SYSTEM, DEVICE AND METHOD", the entire contents of which are incorporated herein in its entirety by reference.

### TECHNICAL FIELD

The present disclosure relates to adjustable remote sensing devices and methods, for detecting information about certain characteristics of electromagnetic radiation.

### BACKGROUND

Remote sensing technologies are used in a variety of applications, because of the advantages they provide, allowing to monitor the physical characteristics of an area by measuring its reflected and emitted radiation at a distance. However, remote sensing systems are normally designed for a specific purpose, and they are therefore designed to have certain characteristics and to operate in a specific spectral range and with a specific spectral resolution. For example, remote sensing devices based on capturing exposures and obtaining information from the captured exposures may need to work on certain spectral regions, with certain spatial and/or spectral resolution, and therefore the remote sensing systems will be manufactured with predefined elements that are suitable for a specific purpose. It would be desirable to have remote sensing systems which could be customized to be adapted to different characteristics of interest of the electromagnetic radiation, different applications, different areas of operation or different conditions of operation.

### SUMMARY

Considerable advantages can be achieved with embodiments of the present disclosure, which provide systems, devices and methods for remote sensing configured to be adapted to different characteristics of interest of the electromagnetic radiation, different applications, different areas of operation or different conditions of operation.

Systems, devices and methods of the present disclosure have advantages which include compact, light, low power consuming remote sensing or remote detection systems and devices for imaging with high spectral resolution and high signal to noise ratio, and with a customizable spectral configuration.

In some embodiments of the present disclosure, the remote sensing systems and methods allow to adjust at least one of the spectral resolution of the detected electromagnetic radiation, or the spectral bandwidth of operation. This is achieved with systems and devices that provide a customizable bandpass filter obtained as a combination of a short pass filter and a long pass filter, such as linear variable optical filters, thereby creating a compact and light spectrometer whose full-width half-maximum (FWHM) can be adjusted/optimized. This adjustment/optimization can be done dynamically and in real time, for example with a closed feedback loop algorithm working on the detected photons in real time. With these systems and devices, it is possible to control the system's spectral resolution according to the available photon budget, such as by maximizing the spectral resolution (minimizing the FWHM) in conditions of abundance of photons (i.e. good surface albedo and optimal illumination conditions) or making the spectral resolution coarser in case of photon scarcity, to obtain a good photon budget and signal-to-noise ratio (SNR) at the expense of a less detailed spectrum, due to the lower spectral resolution. With these systems and devices, it is possible to control the system's spectral band of operation so as to adapt to different characteristics of interest of the electromagnetic radiation, different applications, different areas of operation or different conditions of operation. With these systems and devices, it is possible to control the system's spectral resolution to obtain images with customizable dynamic ranges.

In embodiments of the present disclosure, spectral remote sensing is performed, so as to capture exposures and determine spectral information from the captured exposures. For spectral remote sensing, multispectral systems or hyperspectral systems can be used. A hyperspectral system comprises many spectral bands, such as tens or hundreds of bands, such as 100 or 200 bands, which provides a continuous spectrum with a certain spectral resolution. A multispectral system is a simpler system which has multiple bands, but a much smaller amount than a hyperspectral system, typically 4 or 5 bands, which provides 4 or 5 numbers per measurement. It thus provides a smaller amount of information than a hyperspectral filter, but it has the advantage that there is also a smaller amount of data generated, and hence processed and downloaded or transmitted from the remote sensing system. Hyperspectral systems are normally based on the use of spectrometers, devices that are typically too voluminous and heavy for efficient integration into remote sensing systems with reduced dimensions, such as micro/nanosatellites. The miniaturization of standard spectrometers based on the use of gratings or prisms might provide some improvement. However, the complexity of such systems and their vulnerability during launch would still have disadvantages. The systems and devices according to embodiments of the present disclosure are simpler, more robust and therefore less prone to breakdowns.

The use of variable optical filters, including but not limited to linear variable filters or continuously variable optical filters, constitutes a valuable alternative for the design of hyperspectral payloads. In some embodiments of the present disclosure, the remote sensing systems and devices use hyperspectral technology, and preferably linear variable filters. However, it should be understood that other types of optical filters may be used, such as non-linear variable filters or other mechanisms that allow capture exposures with regions associated with narrow bands of wavelengths. In some embodiments of the present disclosure, the remote sensing systems and devices use multispectral technologies.

Many characteristics/behaviors of the electromagnetic radiation can be measured with remote sensing including, but not limited to, emission, absorption, intensity, energy and/or color. One of such characteristics is the vegetation fluorescence, which offers a type of remote sensing information which can provide very useful information about vegetation dynamics. This information may be applicable for example in precision agriculture. There is however one problem when measuring fluorescence, which is that, in order to detect a fluorescence signal, either for normal plants or for genetically modified ones, fluorescence only represents approximately 1-3% of the reflected light. This means that a remote sensing or detection system with a high signal to noise ratio (SNR), for example of at least 100, is required in order to detect the fluorescence signal. Another problem when detecting fluorescence with detection systems as the ones known in the art is that a very high (i.e., thin) spectral resolution is required. There already exist fluorescence detection systems for large satellites, which work with different architectures, for example using prisms or gratings for light dispersion. However, these fluorescence detection systems are large, heavy, and consume a high amount of energy. In addition, these systems tend to use the Fraunhofer absorption lines to measure the fluorescence in said specific wavelength ranges, which have a very thin bandwidth (<0.1nm). These fluorescence detection systems are therefore required to have a spectral resolution lower than (thinner than) 0.1 nanometers. The narrower the detection bands the better the spectral resolution, nevertheless, the narrower the detection bands, the smaller the amount of valuable photons that reach the detector. Furthermore, the photon availability may vary depending on the scene being monitored. An advantage of the embodiments described herein over prior art approaches is that it is possible to adjust at least one of the spectral resolution or the spectral bandwidth of operation to optimize the detection taking into account the variability of the scenes and the capturing conditions.

At least some embodiments of the present disclosure can address this problem, and they allow to detect fluorescence, for normal plants or for genetically modified ones. For example, embodiments of the present disclosure allow to detect fluorescence emitted by a genetically modified plant which emits signals when exposed to given stresses. Systems and devices according to embodiments of the present disclosure are able to remotely detect such emitted signals, for example from space, through robust and detailed enough hyperspectral imaging.

At least some embodiments of the present disclosure allow to perform other spectral measurements, for example related to agriculture or mineral prospection, or to capture night exposures. In order to capture day and night exposures with the same remote sensing system, an adjustable FWHM can be adapted to the amount of reflected light depending on the area and time of the day.

In general, embodiments of the present disclosure allow to detect any characteristic of electromagnetic radiation which requires optical efficiency and narrow band measurements, using remote sensing systems which do not need to be large, heavy, energy consuming, and which do not require to resolve at very high spectral resolutions or a very high SNR. Instead, remote sensing systems according to embodiments of the present disclosure are compact (of a size no larger than 2 cubesat units (2U)), light, have low power consumption, and can find an optimal trade-off between spectral resolution and photon budget for a particular characteristic of interest of the electromagnetic radiation, an application, an area of operation or a condition of operation. Embodiments of the present disclosure may obtain valuable information about characteristics of electromagnetic radiation by applying data retrieval techniques based on an inversion problem that takes into account collective information, but without requiring to resolve single spectral absorption lines. An example of a fluorescence retrieval method with spectral measurements from space may be the following. A forward model may be built, which describes the total radiance spectrum measured by a satellite as made of a plurality of parts, for example two parts, which can be independently described, the photons which are not fluorescence, plus the fluorescence emitted by the plants on Earth propagated through the atmosphere, or TOA (top of atmosphere). Retrieving the emitted fluorescence from such model may require the inversion of the linear system defined by the forward model. A possible way to perform this inversion is to use the technique of singular vector decomposition related to single-component analysis, which allows the decrease of the dimensionality of the problem simplifying the calculations.

Detection systems (a type of remote sensing or remote detection system) according to embodiments of the present disclosure are therefore more robust, suitable for systems with small detectors, which may detect lower amounts of electromagnetic radiation, because they allow to adapt the FWHM (i.e., the spectral resolution, the bandwidth) and/or spectral band of operation of the optical filter used to define the detectable spectrum, to the specific characteristics of the application, region, or condition of operation. Moreover, there is generally an optimal FWHM for each particular spectroscopy problem, and instead of relying on systems with a fixed hardware configuration, the remote sensing devices according to embodiments of the present disclosure provide a versatile hardware configured to change the FWHM based on the optimal FWHM required for the particular spectral requirement, allowing to detect electromagnetic radiation for different optimal FWHM.

This makes it possible, in some situations, to reduce the FWHM so as to have very thin spectral resolution, while not suffering from the fact that fewer photons reach the detector, because this can for example be done in a situation with a very bright region of interest, where fewer photons are required. For example, if at a certain moment of operation, the remote sensing system is passing over a region with a lot of light, for instance over a lake covered with ice, which reflects a large amount of light, the FWHM of the system can be reduced, by moving at least one of a first filter or a second filter, located at least partially within the optical path of a detecting device of the system, and which form a bandpass filter, with respect to each other. Because the scene has a lot of light, even by reducing the FWHM, there will be enough collected light, while obtaining an increased spectral resolution. In another non-limiting example, for instance when passing over a region with little amount of light, such as an ocean, or having a specific capturing condition such as capturing during night, having enough collected light may be the most restrictive requirement, and therefore it may be required to move at least one of the filters to increase the FWHM, sacrificing some spectral resolution, but being able to collect enough light to obtain meaningful information.

In addition or alternatively, the configuration of remote sensing systems and devices according to the present disclosure makes it possible, in certain embodiments, to increase and reduce the FWHM so as to capture exposures which are overexposed (large FWHM) and exposures which are underexposed (small FWHM) and obtain from them high dynamic range (HDR) spectral images.

Remote sensing systems and devices according to some embodiments of the present disclosure can thus dynamically adjust at least one of a spectral resolution (FWHM) of the remote sensing system or device, or the spectral ranges, band(s) or regions of detection of the remote sensing system or device. According to some embodiments, this dynamic adjustment can be done during manufacturing of the remote sensing system, so as to customize each manufactured detection system to specific spectral ranges of operation and/or to specific spectral resolutions of detection. According to some embodiments, this dynamic adjustment can be done on board the remote sensing system, while flying or in orbit, so as to perform the adjustment autonomously and in real time.

The present disclosure provides a remote sensing system comprising: a detecting device configured to detect electromagnetic radiation; a first filter disposed at least partially within an optical path of the detecting device, and configured to allow electromagnetic radiation of wavelengths below a first threshold to pass towards the detecting device; and a second filter disposed at least partially within the optical path of the detecting device, and configured to allow electromagnetic radiation of wavelengths above a second threshold to pass towards the detecting device, wherein the first threshold is larger than the second threshold, and wherein at least one of a value of the first threshold or a value of the second threshold is determined based at least in part on a spectrum of interest.

According to embodiments of the present disclosure, the system further comprises a positioning mechanism configured to move at least one of the first filter and the second filter along a plane parallel to an active surface of the detecting device along a direction of spectral variation of the first filter and/or the second filter, so that the first threshold and/or the second threshold have the determined value.

According to embodiments of the present disclosure, the positioning mechanism is configured to move the first filter and the second filter independently with respect to each other, and/or to move the first filter and the second filter together with respect to the detecting device.

According to embodiments of the present disclosure, the positioning mechanism is a linear positioning mechanism or a rotational positioning mechanism.

According to embodiments of the present disclosure, the positioning mechanism comprises at least one of a piezoelectric motor, a stepper motor, a brushless motor, or a geared motor.

According to embodiments of the present disclosure, the system further comprises a control module configured to control the positioning mechanism to move at least one of the first filter or the second filter, preferably in real time while the remote sensing system is in operation.

According to embodiments of the present disclosure, the system further comprises: at least one processor; memory coupled to the at least one processor, the memory including one or more modules that are executable by the at least one processor to execute an algorithm with a feedback loop operation, to control the positioning mechanism to move at least one of the first filter and the second filter based at least in part on the spectrum of interest.

According to embodiments of the present disclosure, the first filter and the second filter are linear variable filters.

According to embodiments of the present disclosure, the remote sensing system is a hyperspectral remote sensing system.

According to embodiments of the present disclosure, the first filter and the second filter are disposed so that the system obtains information about a characteristic of the electromagnetic radiation.

According to embodiments of the present disclosure, the characteristic of the electromagnetic radiation is fluorescence.

According to embodiments of the present disclosure, the system is at least partially on board a manned or unmanned aerial or space vehicle.

According to embodiments of the present disclosure, the detecting device is configured to capture at least one exposure.

The present disclosure provides a method of operating a remote sensing system, the method comprising the steps of: determining, by a control module of the remote sensing system, to change at least one of a first threshold defining a first filter of the remote sensing system or a second threshold defining a second filter of the remote sensing system; and controlling, by the control module, a positioning mechanism of the remote sensing system, to move at least one of the first filter and the second filter along a direction of spectral variation of the first or second filter to change at least one of the first threshold or the second threshold; wherein moving at least one of the first filter or the second filter is performed so that a detecting device, configured to detect the electromagnetic radiation that passes between the second threshold and the first threshold, receives electromagnetic radiation of a spectrum of interest.

According to embodiments of the present disclosure, controlling, by the control module, the positioning mechanism to move at least one of the first filter and the second filter along the direction of spectral variation of the first or second filter comprises at least one of: controlling a first positioning mechanism to move at least one of the first filter or the second filter independently with respect to each other; and controlling a second positioning mechanism to move the first filter and the second filter together with respect to the detecting device.

According to embodiments of the present disclosure, the method is performed in real time while the remote sensing system is flying or orbiting on board a manned or unmanned aerial or space vehicle.

According to embodiments of the present disclosure, the method further comprises executing an algorithm stored in the remote sensing system with a feedback loop operation, to control the positioning mechanism to move at least one of the first filter or the second filter based at least in part on the spectrum of interest in real time.

Further features and advantages, as well as the structure and operation of various embodiments are described in detail below, with reference to the accompanying drawings. It is noted that the invention is not limited to the specific embodiments described herein. Such embodiments are presented herein for illustrative purposes only. Additional embodiments will be apparent to persons skilled in the relevant art(s), based on the teachings contained herein.

### BRIEF DESCRIPTION OF THE DRAWINGS

The Detailed Description is set forth with reference to the accompanying figures. In the figures, the left-most digit(s) of a reference number identifies the figure in which the reference number first appears. The use of the same reference numbers in different figures indicates similar or identical items.
FIG. 1 shows a block diagram of components of a remote sensing system according to embodiments of the present disclosure.
FIG. 2 shows a block diagram of components of a remote sensing system according to embodiments of the present disclosure.
FIG. 3A and FIG. **3B** show a block diagram of an operation of a positioning mechanism according to embodiments of the present disclosure.
FIG. 3C and FIG. **3D** show a block diagram of an operation of a positioning mechanism according to embodiments of the present disclosure.
FIG. 4 shows a method of operation of a remote sensing system according to embodiments of the present disclosure.
FIG. 5 shows a method of operation of a remote sensing system according to embodiments of the present disclosure.

### DETAILED DESCRIPTION OF EMBODIMENTS

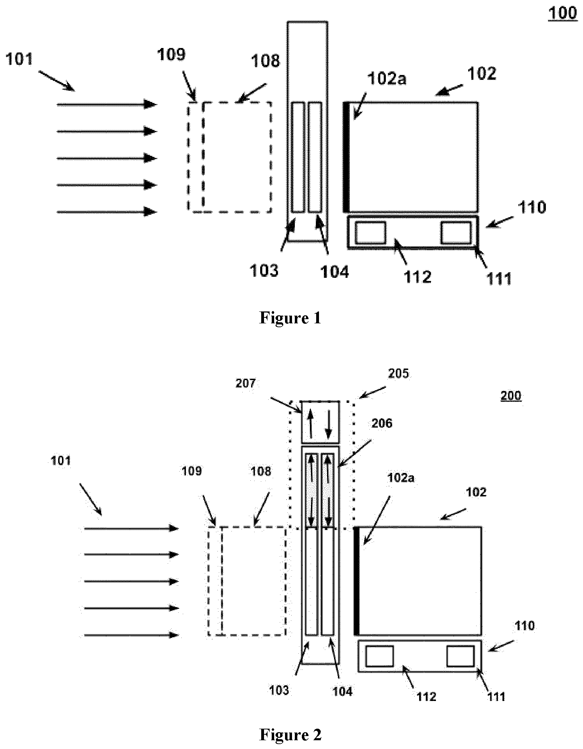

FIG. 1 shows a block diagram of components of a remote sensing system according to embodiments of the present disclosure. The system **100** of FIG. 1 shows beams of incoming electromagnetic radiation 101. The incoming electromagnetic radiation 101 traverses a first filter 103 and a second filter 104 and reaches a detecting device 102. The detecting device 102 or capturing device may be an area imaging device comprising a plurality of pixel sensors, including light-sensitive sensors, such as for example semiconductor components suitable to implement a charge coupled device (CCD), a complementary metal oxide semiconductor (CMOS) sensor, or another suitable sensor architecture on the active surface **102a** of the area imaging device. The detecting device 102 may be a camera, such as a scientific grade camera, or any other suitable detecting device. The detecting device may be characterized by having a full well capacity, which may correspond to the amount of charge that can be stored within an individual pixel without the pixel becoming saturated, and wherein the full well usually increases as the pixel size increases. As a non limiting example, the full well capacity of the detecting device may be at least 50000 e-. The detecting device may be configured to capture exposures.

The first filter 103 and the second filter 104 are configured to be at least partially disposed within an optical path of the detecting device 102. The first filter 103 and the second filter 104 may be variable optical filters including, but not limited to, linear variable optical filters or continuously variable optical filters. As used herein, a variable optical filter refers to optical filters having one or more regions of the filter that allow a high transmission across narrow spectral bandwidths while attenuating unwanted light. Each narrow spectral bandwidth may be characterized by a central wavelength. A continuously variable optical filter is an example of a variable optical filter that can be utilized with embodiments described herein, wherein the range of narrow spectral bandwidths having a high transmission varies continuously, and in some instances may vary continuously across the filter. A linear variable optical filter is another example of a variable optical filter that can be utilized with embodiments described herein, wherein the narrow spectral bandwidths are disposed next to each other varying in one dimension, for example across the filter. A linear variable optical filter may be a subtype of a continuously variable optical filter.

The first filter **103** may be a short-pass filter, configured to allow electromagnetic radiation of wavelengths below a first threshold (or first cutoff wavelength) to pass towards the detecting device **102** while attenuating or reflecting wavelengths above the first threshold, and the second filter **104** may be a long-pass filter, configured to allow electromagnetic radiation of wavelengths above a second threshold (or second cutoff wavelength) to pass towards the detecting device while attenuating or reflecting wavelengths below the second threshold. In embodiments of the present disclosure, the first threshold is larger than the second threshold, thereby creating, with the first filter and the second filter, a bandpass filter or spectrometer configured to allow electromagnetic radiation of wavelengths between (and including) the second threshold and the first threshold to pass towards the detecting device.

The first threshold and/or the second threshold may be determined based at least in part on the spectrum of interest for a certain operation. For example, the first and/or second threshold may be determined so as to define the FWHM of the resulting bandpass filter, and/or to define a spectral band of operation of the resulting bandpass filter, and/or to allow to capture images with different spectral resolution to obtain high dynamic range spectral images.

The remote sensing system also comprises a control module **110** configured to control an overall operation of the remote sensing system. The control module **110** may include an imaging module **112,** configured to process the exposures captured by the detecting device **102.** The imaging module **112** may, for example, be configured to process the captured exposures, or in general the image data obtained from the detecting device, in various ways, including correction of image data distortion, image compression, image formatting, tone mapping to generate high dynamic range (HDR) images, a resolution enhancement algorithm to produce high-resolution images, orthorectification, and a stitching algorithm to generate images from multiple partially overlapping exposures, as well as other processing functions, such as blur removal, artifact removal, color enhancement, cropping, image conversion, image compression, data encryption, and so forth.

The control module may include a memory **111** configured to store program instructions and program modules that are loadable and executable by the control module, as well as data generated during execution of, and/or usable in conjunction with, these programs, such as image data, images, and so forth.

FIG. **1** also shows a directing element **108** of the remote sensing system, represented in dashed lines, which may or may not be present in the remote sensing system. The directing element is configured to collect incoming electromagnetic radiation **101** and send it towards the filters and the detecting device. The directing element **108** may be a partially or completely transmissive optical element which directs an electromagnetic radiation beam by means of refraction, such as a simple lens (which may or may not be athermalized), a compound lens including several simple lenses, or a mirror, a telescope or any element configured to direct electromagnetic radiation. The directing element **108** may be configured to direct, that is, collect and focus, electromagnetic radiation so that it reaches other parts of the system.

FIG. **1** also shows in dashed lines a third filter **109,** positioned in front of the directing element **108** so as to receive the incoming electromagnetic radiation before the directing element. The third filter **109** may be configured to pre-filter the incoming electromagnetic radiation before it is further filtered by the first filter **103** and the second filter **104.** The third filter may allow electromagnetic radiation of wavelengths in a third spectral range to pass towards the detecting device. In some embodiments, for example, where a spectrum of interest of the remote sensing system is located, at least partially, in the infrared range, the third spectral range is located, at least partially, in the infrared spectral range. This third filter may be configured to block photons of incoming electromagnetic radiation with unwanted energy from reaching the detecting device, so as to increase the signal to noise ratio (SNR) of the electromagnetic radiation detected by the detecting device. For example, the third filter may be configured to block any wavelength that is outside the pass band of the bandpass filter formed by the first filter and the second filter.

FIG. **2** shows a block diagram of components of a remote sensing system according to embodiments of the present disclosure. FIG. **2** includes the elements of FIG. **1****,** and it includes, in addition, a positioning mechanism **205** (shown in dotted lines) configured to move at least one of the first filter **103** or the second filter **104** along a plane parallel to an active surface **102a** of the detecting device **102,** along a direction of spectral variation of the first filter or the second filter. The positioning mechanism **205** may comprise a first positioning mechanism **206,** configured to move the first filter **103** and/or the second filter **104** independently with respect to each other. By allowing this independent movement of the first filter and the second filter, the FWHM, and hence the spectral resolution of the resulting bandpass filter, can be adjusted in at least some embodiments of the present disclosure. In addition or alternatively, this movement of the first and second filter independently with respect to each other can be used to obtain high dynamic range (HDR) images. In addition or alternatively to the first positioning mechanism **206,** the positioning mechanism **205** may comprise a second positioning mechanism **207** configured to move the first filter **103** and the second filter **104** together with respect to the detecting device **102.** By allowing this joint movement of the first and second filters, the spectral range or band of operation of the resulting bandpass filter can be shifted in at least some embodiments of the present disclosure. The independent and joint movement of the first and second filters can be combined. The movement of the first and second filters will be explained in more detail elsewhere within this Detailed Description.

The first positioning mechanism **206** may comprise linear actuators, for example a first linear actuator attached to the first filter **103** and a second linear actuator attached to the second filter **104.** The second positioning mechanism **207** may comprise a linear actuator attached to a structure containing the first filter and the second filter, so as to move the first filter and the second filter together. The linear actuators may comprise a piezoelectric motor, a stepper motor, a brushless motor, a geared motor, or another suitable motor configured to provide a linear actuator. In particular, a linear actuator refers to an actuator that causes an element to move along a single dimension. For example, the linear actuators may cause the optical filter(s), such as variable, linear or continuously variable optical filter(s), and/or the structure to move along a linear tracking axis, in the direction of spectral variability of the optical filter(s). Yet, in some embodiments of remote sensing systems and devices comprising the use of coherent, collimated, monochromatic, and high intensity electromagnetic radiation sources, such as lasers, LiDAR, or radiometers, the first filter **103** and the second filter **104** may be arranged with a circular bandpass variability, hence, the first positioning mechanism **106** and/or the second positioning mechanism **107** may comprise rotating actuators, such as a servo motor or some other suitable actuator for rotating the filters with respect to the active surface **102a** of the detecting device **102,** which may provide the advantage of being simpler to operate than linear actuators.

In some embodiments of the present disclosure, the control module **110** (e.g., a processor, a computer) may be in communication with the positioning mechanism **105.** The control module **110** may be configured to activate at least one linear actuator of the positioning mechanism **105** so as to control to move at least the first filter **103** or the second filter **104,** independently or jointly. The control module may be configured to control the positioning mechanism to move at least the first filter **103** or the second filter **104** when the remote sensing system is in operation, on board a manned or unmanned aerial or space vehicle, dynamically and in real time. Memory **111** may be configured to store at least one algorithm to be executed by the control module, wherein the algorithm has a feedback system that allows to control in real time the position of the first and the second filter, and thereby to control at least one of the spectral resolution or the bandwidth of the bandpass filter, and adjust them with the photon budget required for any desired application or area. For example, when measuring above a desert or above a green area, both of which reflect a large amount of light, it is possible to move the first filter and the second filter to close the FWHM of the bandpass filter, in the sense of reducing or narrowing the FWHM, so as to have a spectral resolution as thin as possible. As another example, when measuring above water, where there is much less reflected light, it is possible to open the FWHM of the bandpass filter, in the sense of widen or increasing the FWHM, to sacrifice one part of the spectral resolution, but to have more collected photons and therefore enough collected light. As another example, when capturing exposures during the night, it is possible to increase the FWHM of the bandpass filter, to have more collected photons. As another example, when obtaining high dynamic range images, multiple exposures may be captured, wherein between each capture, the control module controls the positioning mechanism to move the first and second filter so as to change the FWHM to capture exposures having different amounts of collected photons. By operating in this manner, multiple exposures may be combined to generate an image that has a large amount of variation in light levels within the image.

The remote sensing system according to any of the figures can be at least partially on board a manned or unmanned aerial or space vehicle, such as a satellite, an unmanned aerial vehicle (UAV) or drone, an airplane, a platform, a balloon, or the like.

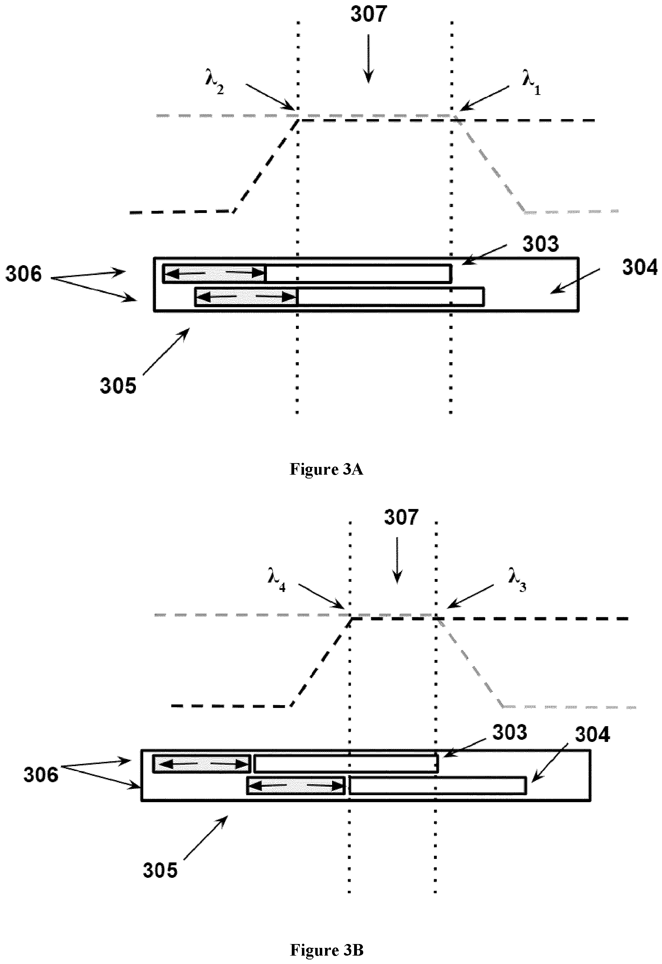

FIG. **3A** and FIG. **3B** show a block diagram of an operation of a positioning mechanism according to embodiments of the present disclosure.

FIG. **3A** shows how a bandpass filter is created, having an operating spectral band **307,** with the first filter **303,** which is a short-pass filter similar to the first filter **103** described in FIG. **1** and FIG. **2****,** with a cutoff wavelength λ₁ and the second filter **304,** which is a long-pass filter similar to the second filter **104** described in FIG. **1** and FIG. **2****,** with a cutoff wavelength λ₂. The operating spectral band **307** or pass band of the bandpass filter in the position of the filters of FIG. **3A** is between (and including, depending on how the cutoff wavelengths are defined) λ₁ and λ₂, taking into account that the filters are not ideal and have a certain predetermined transition zone, which may be determined during the manufacturing process.

FIG. **3B** shows a different position of the first filter **303** and the second filter **304,** where the first filter has now a cutoff wavelength λ₃ different from λ₁, and the second filter has now a cutoff wavelength λ₄ different from λ₂, and the operating spectral band **307** or pass band of the bandpass filter is now between λ₃ and λ₄, which in this example is smaller than the pass band of FIG. **3A** between λ₁ and λ₂, and thereby the FWHM of the bandpass filter, and hence the spectral resolution, is narrower or thinner in the configuration of FIG. **3B****.** By capturing exposures at different FWHM of the bandpass filter created in this manner, it is possible to capture images having different spectral resolution, as well as exposures with different light levels or luminosity. In the example of FIGS. **3A** and **3B****,** the positioning mechanism **305** comprises a first positioning mechanism **306,** which may include two linear actuators configured to move the first filter **303** with respect to the second filter **304,** in the direction of the spectral variability of the filters.

In certain embodiments of the present disclosure, the position of the first filter **303** and the second filter **304** is adjusted at a manufacturing step of the remote sensing system. In this configuration, the positioning mechanism **305** configured to move at least one of the first or second filter may or may not be present. For example, in order to allow for scalability in the manufacturing of the remote sensing system, the positioning system may be present, and only in one of the last manufacturing steps is the bandwidth of the bandpass filter adjusted with the positioning mechanism. In another example, no positioning mechanism is present, and the filters are built into the remote sensing system directly in the desired position. This makes the system simpler, as it requires less elements.

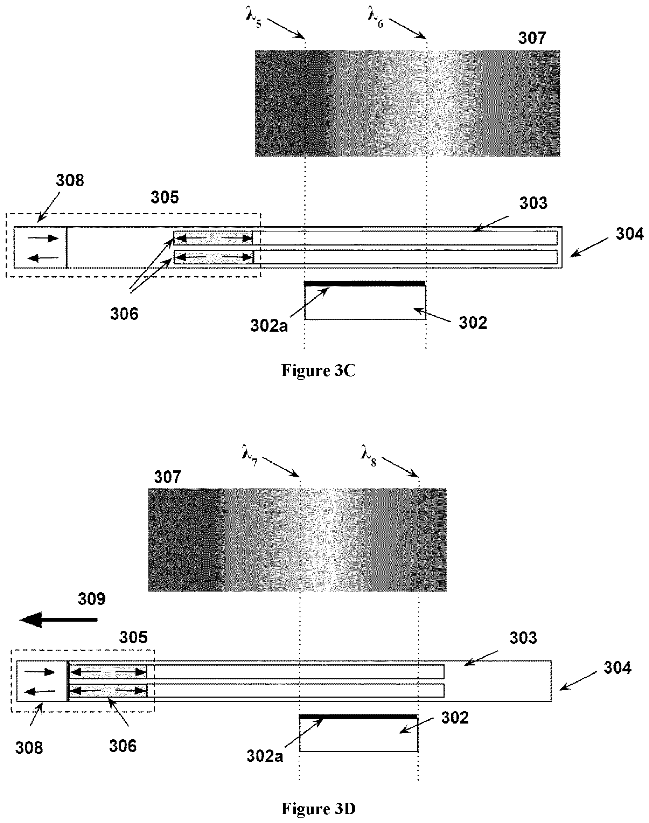

FIG. **3C** and FIG. **3D** show a block diagram of an operation of a positioning mechanism according to embodiments of the present disclosure. FIG. **3C** shows a position of the first filter **303** and the second filter **304** for which the bandpass filter has an effective operating spectral band λ₅ - λ₆. An effective operating spectral band refers to the operating spectral band detectable by the active surface **302a** of the detecting device **302.** FIG. **3D** shows a different position of the first filter and the second filter. The new effective operating spectral band of the bandpass filter is λ₇ - λ₈. This change may be performed by the positioning mechanism **305,** if the second positioning mechanism **308** of the positioning mechanism **305** moves both the first filter **303** and the second filter **304** together in a plane parallel to the active surface **302a** of the detecting device **302** with respect to the detecting device **302,** along a direction of the spectral variation of the first and second filter, following arrow **309,** thereby changing the effective operating spectral band of the bandpass filter. In this example, the first positioning mechanism **306** allows to select the width of the operating spectral band **307** of the bandpass filter created by the first filter **303** and the second filter **304,** whereas the second positioning mechanism **308** allows to select the effective operating spectral band by selecting the zone or region within the operating spectral band to be detected the active surface **302a** of the detecting device **302.** In this example, the first positioning mechanism **306** is configured to move the first filter **303** and the second filter **304** with respect to each other, and the second positioning mechanism **308** is configured to move the filter assembly, i.e. the first filter **303** and the second filter **304** together, with respect to the detecting device **302,** in the direction of spectral variability of the operating spectral band. In this example, the operating spectral band is a linear variable filter having continuously variable linear filter bands, however it should be understood that other configurations are possible. Although FIG. **3C** and FIG. **3D** show the second positioning mechanism **308** and the first positioning mechanism **306** being present, it should also be understood that in certain embodiments only the first positioning mechanism **306** or the second positioning mechanism **308** may be present. Additionally, the positioning mechanism **305** may comprise at least one actuator.

In certain embodiments of the present disclosure, the position of the first filter **303** and the second filter **304** is adjusted in real time, while the remote sensing system is operating on board a manned or unmanned aerial or space vehicle. In this case, the positioning mechanism **305 (**similar to the one described in FIG. **2****)** including the first positioning mechanism **306** and/or the second positioning mechanism **308,** is present, and is controlled by the control module **110,** so as to move the first filter and/or the second filter with respect to each other or with respect to the detecting device.

In certain embodiments of the present disclosure, it is possible to create different operating spectral bands **307,** as shown in FIGs. **3A** and **3B****,** and select a region of the detecting device **302,** by moving the active surface **302a** of the detecting device **302** with respect to the filters as shown in FIGs. **3C** and **3D****,** so as to align the operating spectral band **307** with a particular zone of the detecting device **302** while at the same time, selecting the amount of photons that reach that particular zone of the detecting device **302.** The particular zone and the width of the operating spectral band may be selected based on the spectral response of the detecting device **302.** This is useful for example in instances in which the detecting device has a different spectral response for different ranges of the electromagnetic spectrum. By operating in this manner, that is, by being able to select, as the effective operating spectral band, a particular zone from the active surface of the detecting device the amount of image data to be downloaded from the detecting device may be reduced as well as the time necessary to download the image data.

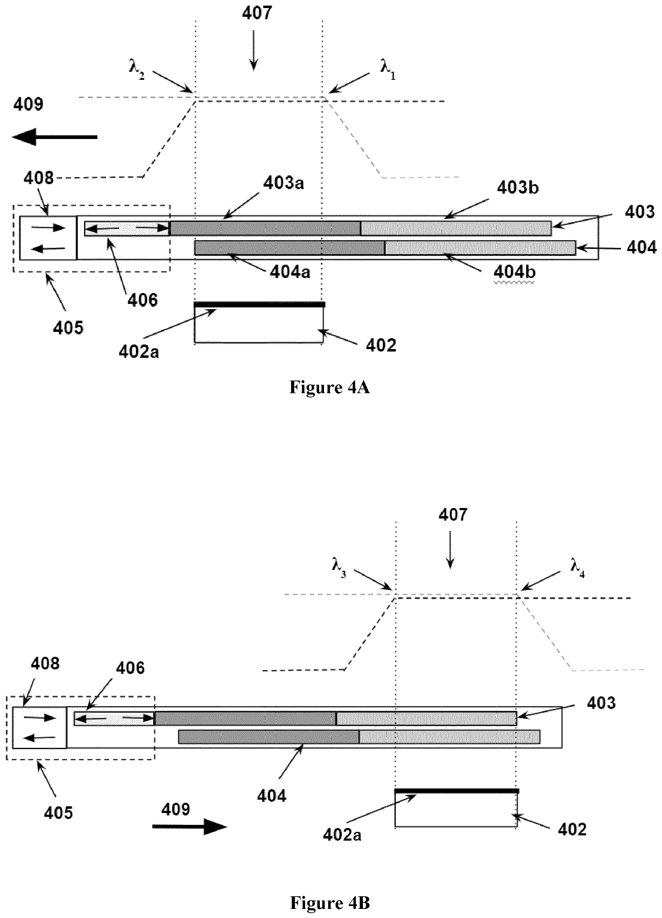

In certain embodiments, in which the remote sensing system or device is designed for applications or situations in which the spectral bands of interest are very distant spectrally, each of the first and second filters may also be made of a plurality of blocks. In some instances, each block may be made of a piece of variable filter, which may be a linear or continuously variable filter centered on top of a specific spectral band. FIG. **4A** and FIG. **4B** illustrates a block diagram of an operation of a positioning mechanism according to embodiments of the present disclosure. FIG. **4A** shows the first-filter **403** having block **403a** and block **403b,** each comprising a range or portion of the electromagnetic spectrum, wherein block **403a** is a short-pass filter with a cutoff wavelength λ₁, and block **403b** is a short-pass filter with a cutoff wavelength λ₃. The second-filter **404** has block **404a,** which is a long-pass filter with a cutoff wavelength λ₂, and block **404b,** which is a long-pass filter with a cutoff wavelength λ₄, each comprising a range or portion of the electromagnetic spectrum. For example, blocks **403a** and **404a** may comprise the range between 400 nm to 800 nm, and blocks **403b** and **404b** may comprise the range between 1000 nm to 2000 nm. It should be understood that other ranges and more blocks are also within the scope of present disclosure, and the selection is based on the specific characteristics of an application, region, or condition of operation. For example, by adding multiple blocks with each spectral band being made of a piece of variable, linear or continuously variable filter around a specific wavelength, the first filter and the second filter may behave as multiband filters.

The first filter **403** and the second filter **404** may be configured to be moved so that the physical shift between the first and second filters results in equivalent transmission band variations for each block. For example, the first positioning mechanism **406,** which may be a linear actuator, may move the first filter **403** with respect to the second filter **404,** along a direction of the spectral variation of the first and second filter, following arrow **409,** thereby creating an effective operating spectral band **407** of the bandpass filter with respect to the active surface **402a** of the detecting device **402.** The effective operating spectral band **407** or pass band of the bandpass filter in the position of the filters of FIG. **4A** is between (and including, depending on how the cutoff wavelengths are defined) λ₁ and λ₂, taking into account that the filters are not ideal and have a certain predetermined transition zone, which may be determined during the manufacturing process. By operating in this manner, the remote sensing device may control the FWHM within the effective operating spectral band. It is also possible to move further in the direction of arrow **409** at the expense of reducing the effective operating spectral band detectable by the active surface **402a** of the detecting device **402.**

FIG. **4B** shows a position of the first filter **403** and the second filter **404** for which the second positioning mechanism **408** moves the both the first filter **403** and the second filter **404** together, in a plane parallel to the active surface **402a** of the detecting device **402** with respect to the detecting device **402,** following arrow **409** (opposite direction than in FIG. **4A**), along a direction of the spectral variation of the first and second filter, thereby changing the spectral range and the effective operating spectral band **407** of the bandpass filter. The effective operating spectral band **407** or pass band of the bandpass filter in the position of the filters of FIG. **4B** is between (and including, depending on how the cutoff wavelengths are defined) λ₃ and λ₄, taking into account that the filters are not ideal and have a certain predetermined transition zone, which may be determined during the manufacturing process. By moving the first filter **403** and the second filter **404** together with respect to the detecting device **402,** the effective operating spectral band λ₃ - λ₄ lies within the electromagnetic range of block **403b** and block **404b.**

In certain embodiments of the present disclosure, it is possible to place the active surface **402a** of the detecting device **402** in the middle of the transition zone between the first filter **403** and the second filter **404,** so as to detect a portion of the spectral range corresponding to blocks **403a** and **404a** and a portion of the spectral range corresponding to blocks **403b** and **404b,** allowing to capture exposures having spectral ranges distantly apart.

In this example, the first positioning mechanism **406** allows to select the width of the operating spectral band **407** of the bandpass filter created by the first filter **403** and the second filter **404,** whereas the second positioning mechanism **408** allows to select the effective operating spectral band by selecting the zone or region within the operating spectral band to be detected the active surface **402a** of the detecting device **402,** with the further advantage that it is possible to select operating spectral bands distantly apart spectrally, in other words, in ranges of the electromagnetic spectrum that are not contiguous.

An adjustment of the FWHM can be obtained if the dispersion gradient of nm/mm is maintained constant even by having discontinuities in the wavelength range of the filters. This configuration may be advantageous in cases in which the detecting device has a spectrally broad quantum efficiency, for example from 400 nm to 2000 nm. In such a situation, it could be convenient to use several segments, for manufacturing simplicity reasons. It may thus be beneficial to divide the spectrum and focus on certain narrower areas of the spectrum, and thereby create the first or second filter with "bands" located in the selected areas within the broader spectrum. This multiband filter obtained from blocks of hyperspectral filters, which behave as a multispectral filter, may be manufactured in one single substrate. In an example for an application to detect methane, each of the first and second filters may be made in this manner, and each of the first and second filter may behave as multispectral filters which have two bands, one of them obtained from a hyperspectral filter centered around 1.6 nm and the other one obtained from a hyperspectral filter centered around 2.3 nm. Embodiments of the present disclosure may allow to move the first and/or second filter so as to change the FWHM of each band.

In certain embodiments, a multispectral system can be obtained even with the first and second filters being variable, linear or continuously variable filters, by selecting or defining specific bands from the varying range of the variable, linear or continuously variable filters.

A bandpass filter according to embodiments of the present disclosure can alternatively be obtained directly as a single component, without combining a long pass filter and a short pass filter. Such a band pass (linear or continuously) variable filter has a fixed FWHM, which depends on the wavelength range of operation and cannot be changed. This solution has the advantage of only requiring a single compact component, however it has the disadvantage of having the fixed FWHM.

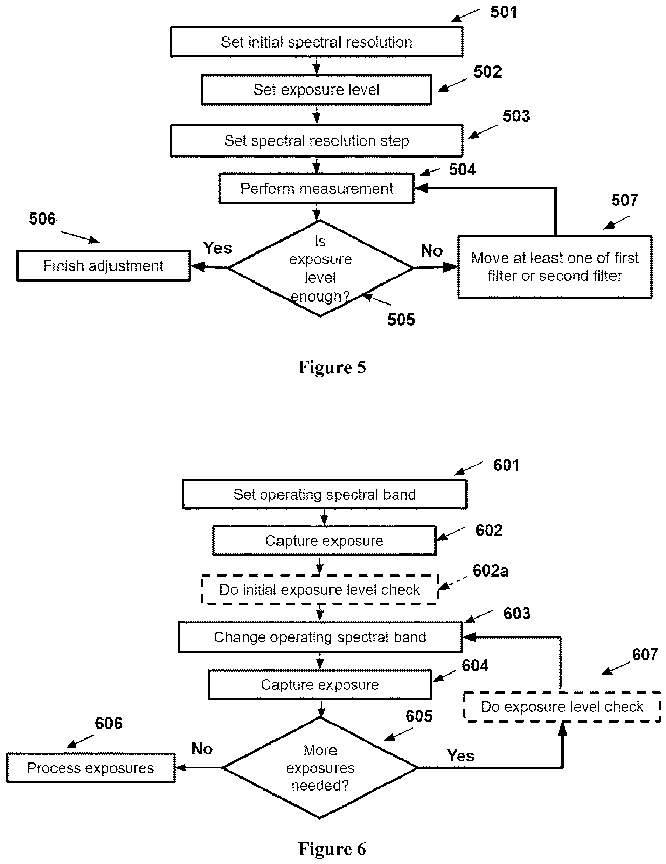

FIG. 5 shows a method **500** of operation of a remote sensing system according to embodiments of the present disclosure.

The method of FIG. 5 has the advantage of allowing to adjust the characteristics of the bandpass filter dynamically and in real time, in order to obtain the thinnest possible spectral resolution but with a minimum acceptable amount of collected electromagnetic radiation, while the remote sensing system is operating on board a manned or unmanned aerial or space vehicle. The steps of the method are illustrated in individual blocks and summarized with reference to those blocks. The steps are illustrated as logical flow graphs, each step of which may represent a set of steps that can be implemented in hardware, software, or a combination thereof. The order in which the steps are described is not intended to be construed as a limitation, and any number of the described steps can be combined in any order, separated into sub-steps, and/or performed in parallel to implement the method. Methods according to various embodiments of the present disclosure may include only some or all of the steps depicted in the logical flow graph.

In step **501,** the control module is configured to set an initial spectral resolution, for example by setting the full width half maximum (FWHM) of the bandpass filter to a certain value. For example, the control module may be configured to initialize the operation by setting the FWHM to a minimum value, so as to provide the thinnest spectral resolution required or desired for the system. In other words, the control module may set a FWHM based on the required spectral resolution for a specific characteristic of interest of the electromagnetic radiation, application, area of operation, condition of operation, or for a specific scenario or situation in general. The minimum FWHM value may thus be set accordingly for each case as the best theoretically desired FWHM. In the subsequent method steps, if such value is too small because it does not allow to collect enough photons, the method will increase it until there is enough electromagnetic radiation passing through to have a desired exposure level (i.e., a desired full well occupation, photon budget or amount of collected electromagnetic radiation). This step is optional, since it may be performed to initialize the method or may be omitted and the method may start from a previously set FWHM value. For example, if the remote sensing system is tasked to capture exposures over a region having known features with associated exposure levels, such as water or land, or captures during the night, the spectral resolution may be set in advance.

In step **502,** the control module is configured to set a value for the exposure level of the detecting device. The exposure level refers to the amount of collected electromagnetic radiation. For example, the control module may set an optimal exposure level, which may be a minimum acceptable exposure level, so as to ensure that a minimum amount of electromagnetic radiation is collected even in the case of the FWHM being minimum. The minimum acceptable exposure level may be set based on the required exposure level for a specific characteristic of interest of the electromagnetic radiation, application, area of operation, condition of operation, or for a specific scenario or situation in general. For example, for an application in which having a high SNR is the most important requirement, perhaps an exposure level of 30% or 50%, which for other applications may be acceptable, may in this case be too low and a higher exposure level may be required to reach a higher SNR (because of the relationship between SNR and exposure level). This step is optional, since an exposure level previously set may be used. For example, if the remote sensing system is tasked to capture exposures over a region having known features with associated exposure levels, such as water or land, or captures during the night, the exposure level may be set in advance.

As another example, when the remote sensing system according to embodiments of the present invention is on board an orbiting satellite, the available exposure time to capture an exposure may depend on the type of maneuver the satellite is performing, and therefore, for different maneuvers, the remote sensing system may have different exposure times and thus may be allowed to collect different amounts of electromagnetic radiation. In this example, the exposure time will also be a parameter that will have an impact when deciding what the minimum exposure level is.

Embodiments of the present disclosure perform an optimization process to search for the overall best possible trade-off between spectral resolution and amount of collected electromagnetic radiation. In systems or situations in which the exposure time is fixed or can only be varied a small amount, varying the FWHM and the exposure level will provide the versatility to adapt to different characteristics of interest of the electromagnetic radiation, applications, areas of operation, conditions of operation, or scenarios/situations in general. The advantage of determining threshold values as lower limits for both the FWHM and the exposure level is that it is possible to find the smallest possible FWHM that can be reached while having an exposure level that is higher than a given threshold. Therefore, in instances in which it is necessary to maximize the trade-off, a minimum required FWHM and a minimum acceptable exposure level are set.

In step 503, the control module is configured to set a spectral resolution step of the positioning mechanism **105, 305, 405** configured to move the first filter **103, 303, 403** and/or second filter **104, 304, 404.** For example, if the positioning mechanism comprises an actuator(s) such as stepper motor(s), the spectral resolution step may be set by setting a step for the motor(s). For instance, a minimum step may be set to move the first or the second filter. The size of this step and the speed at which the first or second filter is moved may be determined based at least in part on the dispersion of the first filter and second filter. In the first filter and second filter, for each millimeter they are moved, the central wavelength moves a certain amount of nanometers. For example, the first filter and/or the second filter may move the central wavelength 7.5 nm per millimeter, so if from a first position they are moved 1 mm, and if in the first position the electromagnetic radiation detected by the detecting device at a certain point of the resulting bandpass filter is at 500 nm, in a second position after moving the 1 mm, the electromagnetic radiation detected by the detecting device at the certain point is at 507.5 nm. This corresponds to the dispersion of the filters. Based on this, the step to move the filters may be determined. In addition or alternatively, the step to move the filters may be determined based at least in part on calculations with models or lab measurements, because it also depends on the transmission shape of the band and on the steepness or transition zone of the filter. In theory, the filter should be a rectangle, but in reality it is not, and the walls are inclined with a certain steepness. Based on how steep the walls of the filter are, they might reduce the transmission band. Therefore, the step of the linear movement may also depend on the gradient of the filter, or steepness of the filter, which can be obtained with models or with measurements. In some instances, the spectral resolution step is determined when the remote sensing is built and is not changed during operation, but it may change during operation.

It is to be noted that the previous method steps may be performed in a different order, and/or at least some may be performed in parallel.

In step **504,** the control module performs a measurement of the characteristic of electromagnetic radiation of interest. For example, if for a certain application, fluorescence is the characteristic of electromagnetic radiation of interest, fluorescence is measured. This may be performed by capturing, by the detecting device, an exposure and obtaining fluorescence information from the captured exposure.

In step **505,** the control module checks whether the exposure level is enough. For this, the control module may check whether the measurement shows a measured exposure level which is equal to or higher than the exposure level set in step **502,** or a previously selected exposure level. Where the measured exposure level is equal to or higher than the set (or preselected) exposure level (the "YES" arrow), it means that enough electromagnetic radiation is collected, and no further adjustments are necessary in the filters, so the control module finishes the adjustment in step **506** and can move on with capturing one or more exposures.

If, on the other hand, the measured exposure level is lower than the set exposure level (the "NO" arrow), it means that not enough electromagnetic radiation is collected, and therefore an adjustment of the filters is necessary in order to increase the FWHM. Hence, in step **507** the control module instructs the positioning mechanism to move at least one of the first filter or the second filter so as to increase the pass band (operating spectral band) of the bandpass filter, thereby increasing the FWHM. The distance that the at least one filter is to be moved, which is to be performed at the spectral resolution steps set in **503,** e.g. a minimum step duration, may be determined based on the value of the measured exposure level. This movement may be performed in one operation and then a new measurement in step **504** may be performed. Alternatively, at least one of the filters may be moved one step duration at a time, and after moving one step, the new measurement in step **504** may be performed. This loop can be repeated until it is determined that the measured exposure level is equal to or higher than the set exposure level.

With this method, it is possible to adjust, in real time and while the remote sensing system is flying or orbiting on board a manned or unmanned aerial or space vehicle, the FWHM so that it is thin enough to have enough spectral resolution for measuring the characteristic of interest (for example fluorescence) but wide enough to collect enough electromagnetic radiation to obtain relevant information. As explained elsewhere within the Detailed Description, the adjustment may be made, while the remote sensing system is flying or orbiting on board a manned or unmanned aerial or space vehicle but in advance, based at least in part, on the characteristic of interest of electromagnetic radiation applications, areas of operation, conditions of operation, or scenarios/situations in general, that the remote sensing system on board the manned or unmanned aerial or space vehicle is scheduled to capture at a later time.

Although not shown in FIG. **5****,** the control module may also be configured, in addition or alternatively to moving the first and the second filter with respect to each other, to move both filters with respect to the detecting device, to change the spectral region of operation of the resulting bandpass filter. When a current application or operation of obtaining information about the characteristic of electromagnetic radiation of interest is finished, the method can be performed again for the next application or operation, thereby setting again at least one of a FWHM, a exposure level and a spectral resolution step for the actuators(s) and moving at least one of the filters if necessary until a desired tradeoff between spectral resolution and amount of collected electromagnetic radiation is reached.

FIG. **6** shows a method of operation of a remote sensing system according to embodiments of the present disclosure. In embodiments of the present disclosure, the operating spectral band characterized by the FWHM of the bandpass filter generated by a short-pass filter and a long-pass filter may be adjusted to obtain high dynamic range (HDR) images. Embodiments of the present disclosure allow to capture hyperspectral images which can be processed to obtain information about at least one characteristic of electromagnetic radiation of interest, such as fluorescence.

In step **601,** the control module may set the operating spectral band (i.e. the FWHM) of the bandpass filter to a certain value. In step **602,** the control module may instruct the detecting device to capture a first exposure. If the FWHM set in step **601** is larger than a certain first FWHM threshold, the first exposure may be a bright exposure in which the darkest pixels may appear well exposed, and the brightest pixels may appear over exposed. If the FWHM set in step **601** is lower than a certain second FWHM threshold, the first exposure may be a dark exposure in which the brightest pixels may appear well exposed, and the darkest pixels may appear underexposed. In certain embodiments, the control module determines in a predefined manner the values of the FWHM of the required exposures, and therefore no further check needs to be done, and the method can move on to step **603.** In certain embodiments, the control system may not know initially what exposure level may be provided for a certain FWHM, and therefore, after capturing a first exposure in step **602,** a check is performed in step **602a** to determine the exposure level of the first exposure, that is, to determine how many photons have been collected. Based on this, a reference value is obtained, which is used by the control module to determine how many more exposures and with what FWHM are needed.

In step **603,** the control module is configured to instruct the positioning mechanism to move the first filter and the second filter with respect to each other, to change their relative position, so that the operating spectral band of the bandpass filter, and therefore its bandwidth, changes, based on the initial exposure level check performed in step **602a** or based on predetermined calculations. In step **604** a new exposure is captured with the adjusted operating spectral band. In step **605,** the control module checks whether more exposures are needed to obtain the HDR image. The control module may know in advance how many exposures are necessary to capture for a certain desired dynamic range, or may determine whether or not it is necessary based on the checked exposure level made in step **602a** or in step **607** as explained below. Where no more exposures are needed (the "NO" arrow), in step **606** the method finishes by not capturing more exposures and processing, by the imaging module, the exposures so as to obtain an HDR image. Where more exposures are needed (the "YES" arrow), the method may go back to step **603** and the control module causes the positioning mechanism to move the first and second filter to change again the operating spectral band of the bandpass filter, and a new exposure is captured. In this scenario, the control module may know, from the predetermined calculations, or from the initial exposure level check of step **602a,** how much the operating spectral band is to be changed for the next exposure, and no further check may be performed. In other embodiments, if this information is not available because the control module has not obtained it in advance, or because an extra check is desired in case that certain conditions might have changed (illumination, albedo, or other conditions that might have changed), step **607** is performed and a new check is done to determine the exposure level and, based on it, the required change of operating spectral band for the next exposure. After the check, the method goes back to step **603.** This second option including step **607** is more complex, and time and resource consuming, however it is robust against changes in the system and environment conditions. The first option is less robust against these changes, because only an initial decision is made, but it is much simpler and requires less resources. By using different operating spectral band (FWHM) values at each iteration step, a richer HDR image may be obtained because for each pixel in different captured exposures there will be information with different levels of brightness. This loop is repeated until it is determined by the control module that no more exposures are needed. In some embodiments, in the method of FIG. **6****,** the central wavelength of the resulting bandpass filter after moving the first and second filters remains the same.

It is to be appreciated that embodiments of the methods and apparatuses discussed herein are not limited in application to the details of construction and the arrangement of components set forth in the following description or illustrated in the accompanying drawings. The methods and apparatuses are capable of implementation in other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiment.

Also, the phraseology and terminology used herein is for the purpose of description and should not be regarded as limiting. Any references to embodiments or elements or acts of the systems and methods herein referred to in the singular may also embrace embodiments including a plurality of these elements, and any references in plural to any embodiment or element or act herein may also embrace embodiments including only a single element. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms.

In the descriptions above and in the claims, phrases such as "at least one of or "one or more of' may occur followed by a conjunctive list of elements or features. The term "and/or" may also occur in a list of two or more elements or features. Unless otherwise implicitly or explicitly contradicted by the context in which it is used, such a phrase is intended to mean any of the listed elements or features individually or any of the recited elements or features in combination with any of the other recited elements or features. For example, the phrases "at least one of A and B:", "at least one of A or B:","one or more of A and B:", "one or more of A or B:", and "A and/or B' are each intended to mean "A alone, B alone, or A and B together." A similar interpretation is also intended for lists including three or more items. For example, the phrases "at least one of A, B, and C:", "at least one of A, B, or C:","one or more of A, B, and C:", "one or more of A, B, or C:", and "A, B, and/or C" are each intended to mean "A alone, B alone, C alone, A and B together, A and C together, B and C together, or A and B and C together." In addition, use of the term "based on" above and in the claims is intended to mean "based at least in part on", such that an unrecited feature or element is also permissible.

### Conclusion

The subject matter described herein can be embodied in systems, apparatus, methods, and/or articles depending on the desired configuration. Although the disclosure uses language that is specific to structural features and/or methodological acts, the invention is not limited to the specific features or acts described. Rather, the specific features and acts are disclosed as illustrative forms of implementing the subject matter described herein. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

## Claims

1. A remote sensing system comprising:
a detecting device configured to detect electromagnetic radiation;
a first filter disposed at least partially within an optical path of the detecting device, and configured to allow electromagnetic radiation of wavelengths below a first threshold to pass towards the detecting device; and
a second filter disposed at least partially within the optical path of the detecting device, and configured to allow electromagnetic radiation of wavelengths above a second threshold to pass towards the detecting device;
wherein the first threshold is larger than the second threshold; and
wherein at least one of a value of the first threshold or a value of the second threshold is determined based at least in part on a spectrum of interest.

2. The system according to claim 1, further comprising a positioning mechanism configured to move at least one of the first filter and the second filter along a plane parallel to an active surface of the detecting device along a direction of spectral variation of the first filter and/or the second filter, so that the first threshold and/or the second threshold have the determined value.

3. The system according to claim 2, wherein the positioning mechanism is configured to move the first filter and the second filter independently with respect to each other, and/or to move the first filter and the second filter together with respect to the detecting device.

4. The system according to any one of claims 2 or 3, wherein the positioning mechanism is a linear positioning mechanism or a rotational positioning mechanism; wherein optionally the linear positioning mechanism comprises at least one of a piezoelectric motor, a stepper motor, a brushless motor, and a geared motor.

5. The system according to any one of claims 2-4, further comprising a control module configured to control the positioning mechanism to move at least one of the first filter or the second filter.

6. The system according to any one of claims 2-5, further comprising:
at least one processor; and
memory coupled to the at least one processor, the memory including one or more modules that are executable by the at least one processor to execute an algorithm with a feedback loop operation, to control the positioning mechanism to move at least one of the first filter and the second filter based at least in part on the spectrum of interest.

7. The system according to any one of the preceding claims, wherein the first filter and the second filter are linear variable filters.

8. The system according to any one of the preceding claims, wherein the remote sensing system is a hyperspectral remote sensing system.

9. The system according to any one of the preceding claims, wherein the first filter and the second filter are disposed so that the system obtains information about a characteristic of the electromagnetic radiation; wherein optionally the characteristic of the electromagnetic radiation is fluorescence.

10. The system according to any one of the preceding claims, being at least partially on board a manned or unmanned aerial or space vehicle.

11. The system according to any one of the preceding claims, wherein the detecting device is configured to capture at least one exposure.

12. A method of operating a remote sensing system, the method comprising the steps of:
- determining, by a control module of the remote sensing system, to change at least one of a first threshold defining a first filter of the remote sensing system or a second threshold defining a second filter of the remote sensing system; and
- controlling, by the control module, a positioning mechanism of the remote sensing system, to move at least one of the first filter or the second filter along a direction of spectral variation of the first or second filter to change at least one of the first threshold or the second threshold;
wherein moving at least one of the first filter and the second filter is performed so that a detecting device, configured to detect the electromagnetic radiation that passes between the second threshold and the first threshold, receives electromagnetic radiation of a spectrum of interest.

13. The method according to claim 12, wherein controlling, by the control module, the positioning mechanism to move at least one of the first filter and the second filter along the direction of spectral variation of the first or second filter comprises at least one of:
- controlling a first positioning mechanism to move at least one of the first filter or the second filter independently with respect to each other; and
- controlling a second positioning mechanism to move the first filter and the second filter together with respect to the detecting device.

14. The method according to any one of claims 12-13, being performed in real time while the remote sensing system is flying or orbiting on board a manned or unmanned aerial or space vehicle.

15. The method according to any one of claims 12-14, further comprising executing an algorithm stored in the remote sensing system with a feedback loop operation, to control the positioning mechanism to move at least one of the first filter or the second filter based at least in part on the spectrum of interest in real time.
